# EUROPEAN PATENT APPLICATION

(11) **EP 2 138 225 A2**
(43) Date of publication of application: **30.12.2009**
(21) Application number: 09161986.6
(22) Date of filing: 05.06.2009
(51) Int. Cl.: B01J 13/20, G03G 5/147

(54) **Method for treating microcapsules for use in imaging member**

(30) Priority: 27.06.2008 US 163770
(71) Applicant: Xerox Corporation, Rochester, NY 14644 (US)
(72) Inventor: de Jong, Kathy L., London Ontario N6H 3K1 (CA); Gagnon, Yvan, Mississauga Ontario L5L 1K2 (CA); Junginger, Johann, Toronto Ontario M6S 3T9 (CA); Skorokhod, Vladislav, Mississauga Ontario L5M 6K4 (CA); Kazmaier, Darren, Mississauga Ontario L5L 1ES (CA); Chopra, Naveen, Oakville Ontario L6H 6S7 (CA)
(74) Representative: Grünecker, Kinkeldey, Stockmair & Schwanhäusser Anwaltssozietät

(57) **Abstract**

The presently disclosed embodiments are directed to a method for treating microcapsules for use in an improved imaging member, namely, in the overcoat layer. The overcoat layer is used for an imaging member having a substrate, a charge transport layer, and an overcoat positioned on the charge transport layer, and a method for making the overcoat layer using the treated microcapsules is provided.

## Description

### BACKGROUND

The presently disclosed embodiments relate generally to layers that are useful in imaging apparatus members and components, for use in electrostatographic, including digital, apparatuses. More particularly, the embodiments pertain to methods for treating microcapsules for use in an improved overcoat layer that provides lubrication and reduced torque. In embodiments, the method subjects silicon oil microcapsules to a urea-formaldehyde cross-linking reaction and subsequently drying (*e.g.,* freeze-drying) the cross-linked microcapsules into solids capable of being incorporated into a dispersion form.

Electrophotographic imaging members, *e.g.,* photoreceptors, photoconductors, imaging members, and the like, typically include a photoconductive layer formed on an electrically conductive substrate. The photoconductive layer is an insulator in the substantial absence of light so that electric charges are retained on its surface. Upon exposure to light, charge is generated by the photoactive pigment, and under applied field charge moves through the photoreceptor and the charge is dissipated.

In electrophotography, also known as xerography, electrophotographic imaging or electrostatographic imaging, the surface of an electrophotographic plate, drum, belt or the like (imaging member or photoreceptor) containing a photoconductive insulating layer on a conductive layer is first uniformly electrostatically charged. The imaging member is then exposed to a pattern of activating electromagnetic radiation, such as light. Charge generated by the photoactive pigment move under the force of the applied field. The movement of the charge through the photoreceptor selectively dissipates the charge on the illuminated areas of the photoconductive insulating layer while leaving behind an electrostatic latent image. This electrostatic latent image may then be developed to form a visible image by depositing oppositely charged particles on the surface of the photoconductive insulating layer. The resulting visible image may then be transferred from the imaging member directly or indirectly (such as by a transfer or other member) to a print substrate, such as transparency or paper. The imaging process may be repeated many times with reusable imaging members.

An electrophotographic imaging member may be provided in a number of forms. For example, the imaging member may be a homogeneous layer of a single material such as vitreous selenium or it may be a composite layer containing a photoconductor and another material. In addition, the imaging member may be layered. These layers can be in any order, and sometimes can be combined in a single or mixed layer.

Typical multilayered photoreceptors or imaging members have at least two layers, and may include a substrate, a conductive layer, an optional charge blocking layer, an optional adhesive layer, a photogenerating layer (sometimes referred to as a "charge generation layer," "charge generating layer," or "charge generator layer"), a charge transport layer, an optional overcoating layer and, in some belt embodiments, an anticurl backing layer. In the multilayer configuration, the active layers of the photoreceptor are the charge generation layer (CGL) and the charge transport layer (CTL). Enhancement of charge transport across these layers provides better photoreceptor performance.

Overcoat layers are commonly included to increase mechanical wear and scratch resistance. In conventional photoreceptors, mechanical wear due to cleaning blade contact or scratches due to contact with paper or carrier beads causes photoreceptor devices to fail. As such, overcoat layers are employed to extend the life of the photoreceptor.

The term "photoreceptor" or "photoconductor" is generally used interchangeably with the terms "imaging member." The term "electrostatographic" includes "electrophotographic" and "xerographic." The terms "charge transport molecule" are generally used interchangeably with the terms "hole transport molecule."

### SUMMARY

The present invention provides:
(1) A method for treating microcapsules for use in an overcoat layer, the method comprising:
   dispersing silicon oil microcapsules in distilled water to form a dispersion;
   adding a solution of urea and formaldehyde to the dispersion;
   adding and reacting an amount of acid with the urea and formaldehyde dispersion to achieve a cross-linking reaction mixture;
   covering and stirring the reaction mixture to facilitate cross-linking;
   separating the cross-linked microcapsules from the reaction mixture;
   rinsing the cross-linked microcapsules with distilled water or deionized water to remove the urea and formaldehyde; and
   drying the cross-linked microcapsules.
(2) The method of (1) further including classifying the dried microcapsules according to size.
(3) The method of (1), wherein the acid is added to the urea and formaldehyde dispersion after the urea and formaldehyde dispersion has a recorded pH level of from about 5.0 to about 7.0.
(4) The method of (1), wherein the acid is added to the urea and formaldehyde dispersion in an amount sufficient to achieve a pH level of from about 2.0 to about 4.0 in the cross-linking reaction mixture.
(5) The method of (4), wherein the acid is added to the urea and formaldehyde dispersion in an amount sufficient to achieve a pH level of from about 2.7 to about 3.0 in the cross-linking reaction mixture.
(6) The method of (1), wherein the solution of urea and formaldehyde comprises a urea-formaldehyde ratio of about 1:4 to about 4:1.
(7) The method of (1), wherein the separating step further comprises separating a first fraction of larger microcapsules and subsequently separating a second fraction of smaller microcapsules.
(8) The method of (1), wherein the acid is selected from the group consisting of acetic acid, trifluoroacetic acid, hydrochloric acid, sulfuric acid, nitric acid, and mixtures thereof.
(9) An imaging member comprising a substrate, an undercoat layer disposed on the substrate, a charge generation layer disposed on the undercoat layer, a charge transport layer disposed on the charge generation layer, and an overcoat layer disposed on the charge transport layer, wherein the overcoat layer is prepared by incorporating microcapsules obtained by the method of (1).
(10) An imaging member comprising a substrate, a charge generation layer disposed on the substrate, a charge transport layer disposed on the charge generation layer, and an overcoat layer disposed on the charge transport layer, wherein the overcoat layer comprises from about 0.1 to about 10 volume % silicon oil containing microcapsules.
(11) The imaging member of (10), wherein the overcoat layer comprises from about 1 to about 3 volume % silicon oil containing microcapsules.
(12) The imaging member of (10), wherein the silicon oil containing microcapsules have a diameter of from about 0.5 to about 3.0 micrometers.
(13) The imaging member of (10), wherein the microcapsules were obtained by a method comprising:
   dispersing silicon oil microcapsules in distilled or deioniozed water to form a dispersion; adding a solution of urea and formaldehyde to the dispersion;
   adding and reacting an amount of acid with the urea and formaldehyde dispersion to achieve a cross-linking reaction mixture;
   covering and stirring the reaction mixture to facilitate cross-linking;
   separating the cross-linked microcapsules from the reaction mixture;
   rinsing the cross-linked microcapsules with distilled or deionized water to remove the urea and formaldehyde; and
   drying the cross-linked microcapsules.
(14) The imaging member of (13), wherein the acid is added to the urea and formaldehyde dispersion after the urea and formaldehyde dispersion has a recorded pH level of from about 5.0 to about 7.0.
(15) The imaging member of (13), wherein the solution of urea and formaldehyde comprises a urea-formaldehyde ratio of about 1:4 to about 4:1.
(16) The imaging member of (13), wherein the drying of the cross-linked microcapsules is performed by freeze drying.
(17) The imaging member of (13), wherein the method further includes classifying the dried microcapsules according to size.
(18) The imaging member of (13), wherein the acid is selected from the group consisting of acetic acid, trifluoroacetic acid, hydrochloric add, sulfuric acid, nitric acid, and mixtures thereof.
(19) The imaging member of (10), wherein the silicon oil containing capsules gradually rupture and release silicone oil during use of the imaging member in an electrophotographic apparatus.
(20) An imaging member comprising a substrate, a charge generation layer disposed on the substrate, a charge transport layer disposed on the charge generation layer, and an overcoat layer disposed on the charge transport layer, wherein the overcoat layer comprises from about 1 to about 3 volume % silicon oil containing microcapsules and have a diameter of from about 0.5 to about 3.0 micrometers.

According to aspects illustrated herein, there is provided a method for treating microcapsules for use in an overcoat layer, the method comprising dispersing silicon oil microcapsules in distilled water to form a dispersion; adding a solution of urea and formaldehyde to the dispersion; adding and reacting an amount of acid with the urea and formaldehyde dispersion to achieve a cross-linking reaction mixture; covering and stirring the reaction mixture to facilitate cross-linking; separating the cross-linked microcapsules from the reaction mixture; rinsing the cross-linked microcapsules with distilled water to remove the urea and formaldehyde; and drying the cross-linked microcapsules.

An embodiment further embodiment provides An imaging member comprising a substrate, an undercoat layer disposed on the substrate, a charge generation layer disposed on the undercoat layer, a charge transport layer disposed on the charge generation layer, and an overcoat layer disposed on the charge transport layer, wherein the overcoat layer is prepared by incorporating microcapsules treated by the above-described method. Embodiment include an imaging member that comprises, among other layers, an overcoat layer that is a product of the coating formulation prepared by the methods presented herein.

Yet another embodiment, there is provided an imaging member comprising a substrate, a charge generation layer disposed on the substrate, a charge transport layer disposed on the charge generation layer, and an overcoat layer disposed on the charge transport layer, wherein the overcoat layer comprises from about 0.1 to about 10 volume % silicon oil containing microcapsules.

Another embodiment provides an imaging member comprising a substrate, a charge generation layer disposed on the substrate, a charge transport layer disposed on the charge generation layer, and an overcoat layer disposed on the charge transport layer, wherein the overcoat layer comprises from about 1 to about 3 volume % silicon oil containing microcapsules and have a diameter of from about 0.5 to about 3.0 micrometers.

### BRIEF DESCRIPTION OF THE DRAWINGS

For a better understanding, reference may be had to the accompanying figure.

FIG. 1 is a cross-sectional view of an imaging member having an overcoat layer according to the present embodiments; and

FIG. 2 is a graph illustrating torque reduction of imaging members fabricated according to the present embodiments.

### DETAILED DESCRIPTION

In the following description, reference is made to the accompanying drawings, which form a part hereof and which illustrate several embodiments. It is understood that other embodiments may be utilized and structural and operational changes may be made without departure from the scope of the present disclosure. The same reference numerals are used to identify the same structure in different figures unless specified otherwise. The structures in the figures are not drawn according to their relative proportions and the drawings should not be interpreted as limiting the disclosure in size, relative size, or location.

The presently disclosed embodiments are directed generally providing overcoat layers that provide abrasion resistance, crack resistance and wear resistance. More specifically, the embodiments pertain to methods for treating microcapsules for use in an improved overcoat layer that provides lubrication and reduced torque. While overcoat formulations are used to increase mechanical wear and scratch resistance, many of the commonly used overcoat formulations result in high start up and running torque.

In the present embodiments, silicon oil microcapsules are incorporated into overcoat formulations to offer a self-lubricating overcoat that releases lubricant during abrasion and provides a specific surface morphology that aids in the reduction of torque. The microcapsules are treated by a urea-formaldehyde cross-linking reaction that strengthens the capsule wall such that the cross-linked microcapsules may undergo drying into a solid capable of being incorporated into the overcoat formulation. The microcapsules lend a roughened surface morphology to the imaging member such that torque is reduced. By controlling the particular sizes of microcapsules used, the surface morphology can also be controlled to achieve the optimal reduction in torque.

In a typical electrostatographic reproducing apparatus, a light image of an original to be copied is recorded in the form of an electrostatic latent image upon a photosensitive member and the latent image is subsequently rendered visible by the application of electroscopic thermoplastic resin particles which are commonly referred to as toner. Specifically, the photoreceptor is charged on its surface by means of an electrical charger to which a voltage has been supplied from power supply. The photoreceptor is then imagewise exposed to light from an optical system or an image input apparatus, such as a laser and light emitting diode, to form an electrostatic latent image thereon. Generally, the electrostatic latent image is developed by bringing a developer mixture from developer station into contact therewith. Development can be effected by use of a magnetic brush, powder cloud, or other known development process.

After the toner particles have been deposited on the photoconductive surface, in image configuration, they are transferred to a copy sheet by transfer means, which can be pressure transfer or electrostatic transfer. In embodiments, the developed image can be transferred to an intermediate transfer member and subsequently transferred to a copy sheet.

After the transfer of the developed image is completed, the copy sheet advances to a fusing station, wherein the developed image is fused to the copy sheet by passing copy sheet the between the fusing member and pressure member, thereby forming a permanent image. Fusing may be accomplished by other fusing members such as a fusing belt in pressure contact with a pressure roller, fusing roller in contact with a pressure belt, or other like systems. The photoreceptor, subsequent to transfer, advances to a cleaning station, wherein any toner left on the photoreceptor is cleaned by use of a blade, brush, or other cleaning apparatus.

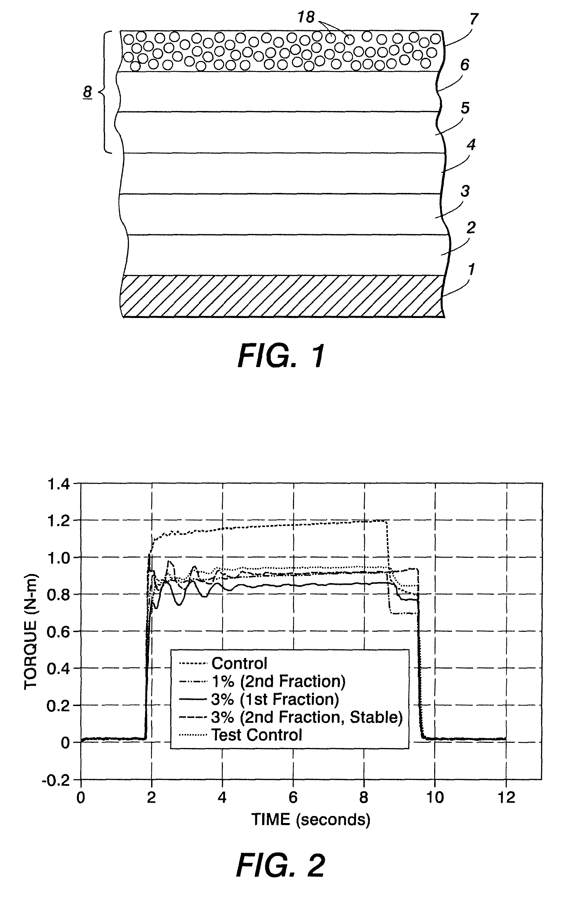

Electrophotographic imaging members are well known in the art. Electrophotographic imaging members may be prepared by any suitable technique. Referring to FIG. 1, typically, a flexible or rigid substrate 1 is provided with an electrically conductive surface or coating 2. The substrate may be opaque or substantially transparent and may comprise any suitable material having the required mechanical properties. Accordingly, the substrate may comprise a layer of an electrically nonconductive or conductive material such as an inorganic or an organic composition. As electrically non-conducting materials, there may be employed various resins known for this purpose including polyesters, polycarbonates, polyamides, polyurethanes, and the like which are flexible as thin webs. An electrically conducting substrate may be any metal, for example, aluminum, nickel, steel, copper, and the like or a polymeric material, as described above, filled with an electrically conducting substance, such as carbon, metallic powder, and the like or an organic electrically conducting material. The electrically insulating or conductive substrate may be in the form of an endless flexible belt, a web, a rigid cylinder, a sheet and the like. The thickness of the substrate layer depends on numerous factors, including strength desired and economical considerations. Thus, for a drum, this layer may be of substantial thickness of, for example, up to many centimeters or of a minimum thickness of less than a millimeter. Similarly, a flexible belt may be of substantial thickness, for example, about 250 micrometers, or of minimum thickness less than 50 micrometers, provided there are no adverse effects on the final electrophotographic device.

Substrate

In embodiments where the substrate layer is not conductive, the surface thereof may be rendered electrically conductive by an electrically conductive coating 2. The conductive coating may vary in thickness over substantially wide ranges depending upon the optical transparency, degree of flexibility desired, and economic factors. Accordingly, for a flexible photoresponsive imaging device, the thickness of the conductive coating may be between about 20 angstroms to about 750 angstroms, or from about 100 angstroms to about 200 angstroms for an optimum combination of electrical conductivity, flexibility and light transmission. The flexible conductive coating may be an electrically conductive metal layer formed, for example, on the substrate by any suitable coating technique, such as a vacuum depositing technique or electrodeposition. Typical metals include aluminum, zirconium, niobium, tantalum, vanadium and hafnium, titanium, nickel, stainless steel, chromium, tungsten, molybdenum, and the like.

Hole Blocking Layer

An optional hole blocking layer 3 may be applied to the substrate 1 or coating. Any suitable and conventional blocking layer capable of forming an electronic barrier to holes between the adjacent photoconductive layer 8 (or electrophotographic imaging layer 8) and the underlying conductive surface 2 of substrate 1 may be used.

Adhesive Layer

An optional adhesive layer 4 may be applied to the hole-blocking layer 3. Any suitable adhesive layer well known in the art may be used. Typical adhesive layer materials include, for example, polyesters, polyurethanes, and the like. Satisfactory results may be achieved with adhesive layer thickness between about 0.05 micrometer (500 angstroms) and about 0.3 micrometer (3,000 angstroms). Conventional techniques for applying an adhesive layer coating mixture to the hole blocking layer include spraying, dip coating, roll coating, wire wound rod coating, gravure coating, Bird applicator coating, and the like. Drying of the deposited coating may be effected by any suitable conventional technique such as oven drying, infrared radiation drying, air drying and the like.

At least one electrophotographic imaging layer 8 is formed on the adhesive layer 4, blocking layer 3 or substrate 1. The electrophotographic imaging layer 8 may be a single layer (7 in FIG. 1) that performs both charge-generating and charge transport functions as is well known in the art, or it may comprise multiple layers such as a charge generator layer 5 and charge transport layer 6.

Charge Generation Layer

The charge generating layer 5 can be applied to the electrically conductive surface, or on other surfaces in between the substrate 1 and charge generating layer 5. A charge blocking layer or hole-blocking layer 3 may optionally be applied to the electrically conductive surface prior to the application of a charge generating layer 5. If desired, an adhesive layer 4 may be used between the charge blocking or hole-blocking layer 3 and the charge generating layer 5. Usually, the charge generation layer 5 is applied onto the blocking layer 3 and a charge transport layer 6, is formed on the charge generation layer 5. This structure may have the charge generation layer 5 on top of or below the charge transport layer 6.

Charge generator layers may comprise amorphous films of selenium and alloys of selenium and arsenic, tellurium, germanium and the like, hydrogenated amorphous silicon and compounds of silicon and germanium, carbon, oxygen, nitrogen and the like fabricated by vacuum evaporation or deposition. The charge-generator layers may also comprise inorganic pigments of crystalline selenium and its alloys; Group II-VI compounds; and organic pigments such as quinacridones, polycyclic pigments such as dibromo anthanthrone pigments, perylene and perinone diamines, polynuclear aromatic quinones, azo pigments including bis-, tris- and tetrakis-azos; and the like dispersed in a film forming polymeric binder and fabricated by solvent coating techniques.

Phthalocyanines have been employed as photogenerating materials for use in laser printers using infrared exposure systems. Infrared sensitivity is required for photoreceptors exposed to low-cost semiconductor laser diode light exposure devices. The absorption spectrum and photosensitivity of the phthalocyanines depend on the central metal atom of the compound. Many metal phthalocyanines have been reported and include, oxyvanadium phthalocyanine, chloroaluminum phthalocyanine, copper phthalocyanine, oxytitanium phthalocyanine, chlorogallium phthalocyanine, hydroxygallium phthalocyanine magnesium phthalocyanine and metal-free phthalocyanine. The phthalocyanines exist in many crystal forms, and have a strong influence on photogeneration.

Any suitable polymeric film forming binder material may be employed as the matrix in the charge-generating (photogenerating) binder layer. Typical polymeric film forming materials include those described, for example, in U.S. Pat. No. 3,121,006, the entire disclosure of which is incorporated herein by reference. Thus, typical organic polymeric film forming binders include thermoplastic and thermosetting resins such as polycarbonates, polyesters, polyamides, polyurethanes, polystyrenes, polyarylethers, polyarylsulfones, polybutadienes, polysulfones, polyethersulfones, polyethylenes, polypropylenes, polyimides, polymethylpentenes, polyphenylene sulfides, polyvinyl acetate, polysiloxanes, polyacrylates, polyvinyl acetals, polyamides, polyimides, amino resins, phenylene oxide resins, terephthalic acid resins, phenoxy resins, epoxy resins, phenolic resins, polystyrene and acrylonitrile copolymers, polyvinylchloride, vinylchloride and vinyl acetate copolymers, acrylate copolymers, alkyd resins, cellulosic film formers, poly(amideimide), styrenebutadiene copolymers, vinylidenechloride-vinylchloride copolymers, vinylacetate-vinylidenechloride copolymers, styrene-alkyd resins, polyvinylcarbazole, and the like. These polymers may be block, random or alternating copolymers.

The photogenerating composition or pigment is present in the resinous binder composition in various amounts. Generally, however, from about 5 percent by volume to about 90 percent by volume of the photogenerating pigment is dispersed in about 10 percent by volume to about 95 percent by volume of the resinous binder, or from about 20 percent by volume to about 30 percent by volume of the photogenerating pigment is dispersed in about 70 percent by volume to about 80 percent by volume of the resinous binder composition. In one embodiment, about 8 percent by volume of the photogenerating pigment is dispersed in about 92 percent by volume of the resinous binder composition. The photogenerator layers can also fabricated by vacuum sublimation in which case there is no binder.

Any suitable and conventional technique may be used to mix and thereafter apply the photogenerating layer coating mixture. Typical application techniques include spraying, dip coating, roll coating, wire wound rod coating, vacuum sublimation, and the like. For some applications, the generator layer may be fabricated in a dot or line pattern. Removing of the solvent of a solvent coated layer may be effected by any suitable conventional technique such as oven drying, infrared radiation drying, air drying and the like.

Charge Transport Layer

The charge transport layer 6 may comprise a charge transporting small molecule 22 dissolved or molecularly dispersed in a film forming electrically inert polymer such as a polycarbonate. The term "dissolved" as employed herein is defined herein as forming a solution in which the small molecule is dissolved in the polymer to form a homogeneous phase. The expression "molecularly dispersed" is used herein is defined as a charge transporting small molecule dispersed in the polymer, the small molecules being dispersed in the polymer on a molecular scale. Any suitable charge transporting or electrically active small molecule may be employed in the charge transport layer of this invention. The expression charge transporting "small molecule" is defined herein as a monomer that allows the free charge photogenerated in the transport layer to be transported across the transport layer. Typical charge transporting small molecules include, for example, pyrazolines such as 1-phenyl-3-(4'-diethylamino styryl)-5-(4"-diethylamino phenyl)pyrazoline, diamines such as N,N'-diphenyl-N,N'-bis(3-methylphenyl)-(1,1'-biphenyl)-4,4'-diamine, hydrazones such as N-phenyl-N-methyl-3-(9-ethyl)carbazyl hydrazone and 4-diethyl amino benzaldehyde-1,2-diphenyl hydrazone, and oxadiazoles such as 2,5-bis (4-N,N'-diethylaminophenyl)-1,2,4-oxadiazole, stilbenes and the like. As indicated above, suitable electrically active small molecule charge transporting compounds are dissolved or molecularly dispersed in electrically inactive polymeric film forming materials. A small molecule charge transporting compound that permits injection of holes from the pigment into the charge generating layer with high efficiency and transports them across the charge transport layer with very short transit times is N,N'-diphenyl-N,N'-bis(3-methylphenyl)-(1,1'-biphenyl)-4,4'-diamine (TPD).

If desired, the charge transport material in the charge transport layer may comprise a polymeric charge transport material or a combination of a small molecule charge transport material and a polymeric charge transport material.

Any suitable electrically inactive resin binder insoluble in the alcohol solvent may be employed in the charge transport layer of this invention. Typical inactive resin binders include polycarbonate resin (such as MAKROLON), polyester, polyarylate, polyacrylate, polyether, polysulfone, and the like. Molecular weights can vary, for example, from about 20,000 to about 150,000. Examples of binders include polycarbonates such as poly(4,4'-isopropylidene-diphenylene)carbonate (also referred to as bisphenol-A-polycarbonate, poly(4,4'-cyclohexylidinediphenylene) carbonate (referred to as bisphenol-Z polycarbonate), poly(4,4'-isopropylidene-3,3'-dimethyldiphenyl)carbonate (also referred to as bisphenol-C-polycarbonate) and the like. Any suitable charge transporting polymer may also be used in the charge transporting layer of this invention. The charge transporting polymer should be insoluble in the alcohol solvent employed to apply the overcoat layer of this invention. These electrically active charge transporting polymeric materials should be capable of supporting the injection of photogenerated holes from the charge generation material and be capable of allowing the transport of these holes there through.

Any suitable and conventional technique may be used to mix and thereafter apply the charge transport layer coating mixture to the charge generating layer. Typical application techniques include spraying, dip coating, roll coating, wire wound rod coating, and the like. Drying of the deposited coating may be effected by any suitable conventional technique such as oven drying, infrared radiation drying, air drying and the like.

Generally, the thickness of the charge transport layer is between about 10 and about 50 micrometers, but thicknesses outside this range can also be used. The hole transport layer should be an insulator to the extent that the electrostatic charge placed on the hole transport layer is not conducted in the absence of illumination at a rate sufficient to prevent formation and retention of an electrostatic latent image thereon. In general, the ratio of the thickness of the hole transport layer to the charge generator layers can be maintained from about 2:1 to 200:1 and in some instances as great as 400:1. The charge transport layer, is substantially non-absorbing to visible light or radiation in the region of intended use but is electrically "active" in that it allows the injection of photogenerated holes from the photoconductive layer, i.e., charge generation layer, and allows these holes to be transported through itself to selectively discharge a surface charge on the surface of the active layer.

Overcoat Layer

Traditional overcoat layers comprise a dispersion of nanoparticles, such as silica, metal oxides, ACUMIST (waxy polyethylene particles), PTFE, and the like. The nanoparticles may be used to enhance the lubricity, scratch resistance, and wear resistance of the charge transport layer 6. However, such commonly used overcoat formulations have instability problems and also exhibit higher start up and running torque than control drum photoreceptors without an overcoat layer.

In embodiments, an overcoat layer 7 is coated on the charge-transporting layer. As discussed above, the overcoat layer 7 incorporates treated silicon oil microcapsules 18 that provide desired lubrication and reduced torque. As shown in FIG. 2, imaging members having overcoat layers with the microcapsules exhibited lower torque than those without the microcapsules or even those without overcoat layers. In the present embodiments, there is provided a method for treating the microcapsules for use in the overcoat layer 7. The microcapsules 18 are treated by a urea-formaldehyde cross-linking reaction that strengthens the capsule wall such that the cross-linked microcapsules ma undergo drying into a solid capable of being incorporated into the overcoat formulation. The microcapsules 18 lend a roughened surface morphology to the imaging member such that torque is reduced.

In embodiments, the overcoat layer comprises from about 0.1 to about 10 volume % silicon oil containing microcapsules. In further embodiments, the overcoat layer comprises from about 1 to about 3 volume %. The silicon oil containing microcapsules may have a diameter of from about 0.5 to about 3.0 micrometers. In addition, the silicon oil containing capsules gradually rupture and release silicone oil during the use in an electrophotographic apparatus. In a specific embodiment, the silicon oil containing microcapsules are contained in a top layer of the overcoat layer such that any cracks or wear to the overcoat layer initiates the rupture of the microcapsules such that the silicon is released to self-heal the imaging member.

To treat the microcapsules, the method comprises dispersing the silicon oil microcapsules in distilled water to form a dispersion. A freshly prepared solution of urea and formaldehyde is then added to the dispersion. In particular embodiments, the urea-formaldehyde solution has a urea to formaldehyde ratio of from about 1:4 to about 4:1, or from about 1:2 to about 2:1. In a specific embodiment, the ratio is 1:1. After recording a pH level of about 5 to about 7, or of about 5 to about 5.2 in the dispersion, an acid is added to lower the pH level to from about 2 to about 4, or more particularly, from about 2 to about 3, or from about 2.7 to about 3.0. The acid used can be selected from the group consisting of acetic acid, trifluoroacetic acid, hydrochloric acid, sulfuric acid, nitric acid and mixtures thereof. The acid is dilute to avoid sharp pH changes. In some embodiments, the acid may be from about 5% to about 30% (v/v) acetic acid, or from about 15% to about 20% (v/v) acetic acid. In one embodiment, the acid is 20% (v/v) acetic acid. The acid is reacted with the urea and formaldehyde dispersion to achieve a cross-linking reaction mixture, and the reaction mixture is covered and stirred for about one hour to facilitate the cross-linking. The reaction mixture is separated, for example by pouring the mixture into a separatory funnel, to collect the treated and cross-linked microcapsules. In those embodiments using a separatory funnel, the larger microcapsules sink to the bottom quickly and are separated immediately in a first fraction and rinsed twice with distilled water to remove the urea-formaldehyde residue. Smaller capsules which may require a longer period of time to separate out are removed in a second fraction and also rinsed twice with distilled water. The separated and cross-linked microcapsules are then dried. After drying, the microcapsules may be further classified according to size. By controlling the particular sizes of microcapsules used, the surface morphology can also be controlled to achieve the optimal reduction in torque.

In further embodiments, there is provided an imaging member comprising a substrate, a charge generation layer disposed on the substrate, a charge transport layer disposed on the charge generation layer, and an overcoat layer disposed on the charge transport layer, wherein the overcoat layer is prepared by incorporating the treated microcapsules. Incorporation of the dried microcapsules into an overcoat formulation have shown to provide an improved overcoat layer. In embodiments, the microcapsules are added to a formulation comprising a binder, a charge transport molecule, a curing agent, a catalyst, a leveling additive and a solvent. The dried microcapsules, the catalyst and leveling additive are incorporated into the overcoat formulation one hour prior coating.

Any suitable and conventional technique may be utilized to form and thereafter apply the overcoat layer mixture to the imaging layer. Typical application techniques include, for example extrusion coating, draw bar coating, roll coating, wire wound rod coating, and the like. The overcoat layer 7 may be formed in a single coating step or in multiple coating steps. Drying of the deposited coating may be effected by any suitable conventional technique such as oven drying, infra red radiation drying, air drying and the like. The thickness of the dried overcoat layer may depend upon the abrasiveness of the charging, cleaning, development, transfer, etc. system employed and can range up to about 10 microns. In these embodiments, the thickness can be between about 0.5 microns and about 20 microns in thickness. A thickness of between about 2 micron and about 14 microns is preferred. In specific embodiments, the dried microcapsules are present in an amount of from about 1 percent to about 10 percent by weight of the total weight of the overcoat layer, or more particularly, from about 3 percent to about 10 percent by weight of the total weight of the overcoat layer.

Various exemplary embodiments encompassed herein include a method of imaging which includes generating an electrostatic latent image on an imaging member, developing a latent image, and transferring the developed electrostatic image to a suitable substrate.

### EXAMPLES

The example set forth herein below and is illustrative of different compositions and conditions that can be used in practicing the present embodiments. All proportions are by weight unless otherwise indicated.

**Example 1**

Experimental devices having varying amounts of the treated microcapsules incorporated into the overcoat layer were fabricated and tested against the control device. The specific details of the overcoat formulations used in the experimental devices are illustrated in Table 1.

**Table 1**

| | **Binder (± 0.1)** | **Charge Transport Molecule (± 0.01)** | **Curing agent (± 0.05)** | **Catalyst (±0.02)** | **Leveling Additive (± 0.01)** | **Solvent (± 0.1)** | **% Solid Content** |
|---|---|---|---|---|---|---|---|
| **Compound** | **JONCRYL 587** | **N,N'-diphenyl-N,N'-bis(3-hydroxyphenyl)-[1,1'-biphenyl]-4,4'-diamine (DHTBD)** | **CYMEL 303** | **NACURE 5225** | **SILCLEAN** | **DOWANOL PM** | **22%** |
| **% Solids or loading** | **100** | **40** | **100** | **1** | **-** | **0** | **Scaling Factor** |
| **Mass used (g)** | **1.000** | **1.610** | **1.400** | **0.120** | **0.040** | **14.080** | **1.500** |
| **Mass solids (g) or % loading** | **1.000** | **40.0%** | **1.400** | **1.0%** | **-** | **14.080** | **Total Volume** |
| **Scaled (g)** | **1.5000** | **2.4150** | **2.1000** | **0.1800** | **0.0600** | **21.1128** | **27.3700** |

JONCRYL® 587 is an acrylic polymer available from BASF Corporation (Sturtevant, WI). CYMEL® 303 is an amino crosslinking resin available from CYTEC Industries Inc. (West Paterson, NJ). NACURE® 5225 is an acid catalyst availabe from King Industries Inc. (Norwalk, CT). SILCLEAN® is a leveling additive derived from a solution of a silicone modified polyacrylate with a solvent such as methoxypropylacetate (available from BYK Chemie, Wesel, Germany). DOWANOL PM® is a glycol ether available from The Dow Chemical Company (Midland, MI).

To the above formulation, different loadings (1%, 3% and 10%) of the treated microcapsules were incorporated into the overcoat layers of the experimental devices by hand coating. The cup-coated drums (Tsukiage coater) exhibited even distribution of the microcapsules across the surface.

The photoreceptor drums were subjected to torque measurements. The measurements were made on the following devices: a control drum photoreceptor without an overcoat layer, a drum photoreceptor with an overcoat layer but without the microcapsules, and three sample drums having different microcapsule loadings (1%, 3% and 10%). Two different sizes of microcapsules were employed at the 3% loadings. As demonstrated in FIG. 2, the results indicated that drums with overcoat layers having the microcapsules exhibited a 20% reduction in torque as compared to the drum having an overcoat layer without the microcapsules. Different combinations of microcapsule size and loading may be further tuned to achieve optimal torque reduction.

In addition, photo-induced discharge (PIDC) test results demonstrated that incorporation of the treated silicon oil microcapsules did not adversely impact the discharge performance and cycling stability of the imaging member. For example, experimental devices with overcoat layers having the treated microcapsules gave electrical performances (*e.g.,* cycling stability and PIDC) nearly identical to the control without the overcoat layer, verifying that the desired properties of the overcoat formulation were maintained.

## Claims

1. A method for treating microcapsules for use in an overcoat layer, the method comprising:
dispersing silicon oil microcapsules in distilled water to form a dispersion;
adding a solution of urea and formaldehyde to the dispersion;
adding and reacting an amount of acid with the urea and formaldehyde dispersion to achieve a cross-linking reaction mixture;
covering and stirring the reaction mixture to facilitate cross-linking;
separating the cross-linked microcapsules from the reaction mixture;
rinsing the cross-linked microcapsules with distilled water or deionized water to remove the urea and formaldehyde; and
drying the cross-linked microcapsules.

2. The method of claim 1 further including classifying the dried microcapsules according to size.

3. The method of claim 1, wherein the acid is added to the urea and formaldehyde dispersion after the urea and formaldehyde dispersion has a recorded pH level of from about 5.0 to about 7.0.

4. The method of claim 1, wherein the acid is added to the urea and formaldehyde dispersion in an amount sufficient to achieve a pH level of from about 2.0 to about 4.0 in the cross-linking reaction mixture.

5. The method of claim 4, wherein the acid is added to the urea and formaldehyde dispersion in an amount sufficient to achieve a pH level of from about 2.7 to about 3.0 in the cross-linking reaction mixture.

6. The method of claim 1, wherein the solution of urea and formaldehyde comprises a urea-formaldehyde ratio of about 1:4 to about 4:1.

7. The method of claim 1, wherein the separating step further comprises separating a first fraction of larger microcapsules and subsequently separating a second fraction of smaller microcapsules.

8. The method of claim 1, wherein the acid is selected from the group consisting of acetic acid, trifluoroacetic acid, hydrochloric acid, sulfuric acid, nitric acid, and mixtures thereof.

9. An imaging member comprising a substrate, an undercoat layer disposed on the substrate, a charge generation layer disposed on the undercoat layer, a charge transport layer disposed on the charge generation layer, and an overcoat layer disposed on the charge transport layer, wherein the overcoat layer is prepared by incorporating microcapsules obtained by the method of claim 1.

10. An imaging member comprising a substrate, a charge generation layer disposed on the substrate, a charge transport layer disposed on the charge generation layer, and an overcoat layer disposed on the charge transport layer, wherein the overcoat layer comprises from about 0.1 to about 10 volume % silicon oil containing microcapsules.

11. The imaging member of claim 10, wherein the overcoat layer comprises from about 1 to about 3 volume % silicon oil containing microcapsules.

12. The imaging member of claim 10, wherein the silicon oil containing microcapsules have a diameter of from about 0.5 to about 3.0 micrometers.

13. The imaging member of claim 10, wherein the microcapsules were obtained by a method comprising:
dispersing silicon oil microcapsules in distilled or deioniozed water to form a dispersion; adding a solution of urea and formaldehyde to the dispersion;
adding and reacting an amount of acid with the urea and formaldehyde dispersion to achieve a cross-linking reaction mixture;
covering and stirring the reaction mixture to facilitate cross-linking;
separating the cross-linked microcapsules from the reaction mixture;
rinsing the cross-linked microcapsules with distilled or deionized water to remove the urea and formaldehyde; and
drying the cross-linked microcapsules.

14. The imaging member of claim 10, wherein the silicon oil containing capsules gradually rupture and release silicone oil during use of the imaging member in an electrophotographic apparatus.

15. An imaging member comprising a substrate, a charge generation layer disposed on the substrate, a charge transport layer disposed on the charge generation layer, and an overcoat layer disposed on the charge transport layer, wherein the overcoat layer comprises from about 1 to about 3 volume % silicon oil containing microcapsules and have a diameter of from about 0.5 to about 3.0 micrometers.
